Europäisches Patentamt

European Patent Office

Office européen des brevets

(11) Publication number: 0 322 007
A1

# EUROPEAN PATENT APPLICATION

(21) Application number: 88202686.7

(22) Date of filing: 25.11.88

(51) Int. Cl.4: C04B 35/65 , C04B 35/56

(30) Priority: 16.12.87 IT 2303487

(43) Date of publication of application:
28.06.89 Bulletin 89/26

(84) Designated Contracting States:
AT BE CH DE ES FR GB GR LI LU NL SE

(71) Applicant: ENIRICERCHE S.p.A.
Corso Venezia 16
I-20121 Milan(IT)

(72) Inventor: Petrucci, Ferruccio
Via Americo Patrizi 25
I-05100 Terni(IT)
Inventor: Di Rese, Leonardo
Via Verbania 16
I-00182 Rome(IT)
Inventor: Scafe', Ernesto
Via Francesco Zanardi 22 Int. 13
I-00155 Rome(IT)

(74) Representative: Roggero, Sergio et al
Ing. Barzanò & Zanardo Milano S.p.A. Via
Borgonuovo 10
I-20121 Milano(IT)

(54) Method for producing ceramic components.

(57) A method is described for producing ceramic components of silicon carbide and elemental silicon from suitably treated carbon materials and elemental silicon by reactive sintering.

The method enables high silicon carbon concentrations to be obtained without using powder mixtures containing silicon carbide. The excess liquid silicon also eliminates residual porosity to the extent that the density of the components obtained is close to the theoretical.

EP 0 322 007 A1

## METHOD FOR PRODUCING CERAMIC COMPONENTS

This invention relates to a method for producing ceramic components formed from silicon carbide and elemental silicon. Silicon carbide is a material which sinters with extreme difficulty. Components with a density close to the theoretical have been produced by complex methods using additives. Those methods generally known as "reactive sintering" use mixtures of powdered silicon carbide and carbon at a temperature of about 1500°C without the application of pressure. The carbon reacts by infiltration with molten silicon to form silicon carbide to thus bind the already present silicon carbide particles. The liquid silicon excess fills the residual porosity, as described for example in Special Ceramics 5 (1971) pp 99-123.

USA patent 3,275,772 describes a method using silicon carbide, carbon and polymer binders heated to high temperature in the presence of essentially silicon vapour. Considerable difficulties arise however if a silicon carbide content exceeding 70 vol % is required.

This is because the conversion of the carbon into silicon carbide is incomplete due to non-homogeneous regions with carbon agglomerates which form during the powder homogenisation.

Any carbon residues in the finished component drastically reduce its mechanical strength.

Another method is reported in USA patent 4,148,894 which describes the use of suitably shaped two-compartment graphite moulds lined internally with boron nitride. The mixture of powdered graphite and particulated inorganic material substantially inert to molten silicon, such as silicon carbide, together with temporary binders is placed in one of the compartments.

The silicon is melted in the other mould compartment and penetrates through carbon fibre wicks into the shaped compartment where reactive sintering takes place.

In addition to a rather low reaction rate, the drawback of this method is the non-homogeneous distribution of the molten silicon, allowing unreacted carbon inclusions to form.

Another method is that described in USA patent 4,385,020. According to the patent the material is prepared from carbon and silicon powders, plus the addition of powdered silicon carbide if high carbide concentrations are required.

The said patents describe some of the various methods used in attempting to obtain compact homogeneous materials, and represent those approaches which have been generally followed to overcome the various technical problems.

An advantage of methods using temporary binders is that use can be made of the typical cold-forming methods for plastics (eg. extrusion), but their disadvantage is that a considerable time, even as much as some days, is required for removal or carbonization of the binder.

In addition the various coexisting forms of carbon material present different behaviour towards molten silicon and can result in a non-homogeneous final product.

When temporary binders are not used, the shape is maintained by costly graphite-lined moulds which considerably slow down the industrial production of components.

Moreover, all the described materials have to be prepared with considerable silicon carbide additions (more than 80%) to obtain high mechanical strength.

For this reason the methods used to prepare them would be more correctly called "reaction bonding" to indicate that the silicon carbide formed by reactive sintering serves only to bond the previously existing silicon carbide powder.

It is well known that $\alpha$ silicon carbide must be subjected to lengthy machining and subsequent decontamination with acid washes to obtain powder of useful dimensions (< 10 $\mu$m).

In contrast the methods based on vapour phase reactions (which generally give the $\beta$ phase) produce powder which is too fine (< 0.1 $\mu$m) and too costly.

Furthermore, powdered silicon carbide erodes cold-forming moulds to further increase process costs.

It has now been found that the problems of the known art can be obviated by the present invention which is based on the discovery that silicon carbide -elemental silicon ceramic components can be obtained containing up to nearly 100% of silicon carbide by volume, by using suitably chosen carbon powders but without incorporating powdered silicon carbide in the initial mixture, and employing conventional cold-forming methods such as cold axial or isostatic pressing.

In accordance with this, the present invention provides a method for producing ceramic components formed from silicon carbide and elemental silicon, comprising the following stages in succession:

a) mixing together
- 100 parts by weight of carbon material chosen from graphitized or carbonized rayon fibres or phenolic substances ground to an average particle size of less than 10 $\mu$m and a geometrical density of less than 1.6 g/cm$^3$;
- from 0 to 250 parts by weight of powdered silicon with an average particle size of less than 25 $\mu$m;

and
- from 1 to 10% by weight (of the total powder mixture) of water;

b) cold-forming the mixture obtained in stage a) by pressing until a density of between 0.9 and 1.9 g/cm³ is obtained for the resultant crude compact;

c) cold-forming a crude compact from powdered silicon having an average particle size of less than 300 μm, using a silicon quantity which when added to the quantity used in stage a) gives a total varying from 270 to 400 parts by weight per 100 parts by weight of the carbon material present in the crude compact of stage b);

d) heating the crude compacts obtained in stages b) and c), placed in contact with each other, to a temperature of between 1410 and 1800°C at a pressure of between $10^{-3}$ and 100 Pa, until the carbon material has been converted completely or substantially completely into silicon carbide.

One of the basic characteristics of the process is the choice of carbon material, which is in the form of carbon fibres obtained by graphitizing or pyrolysis of rayon or phenolic substances. The use for example of carbon black in the powder preparation described in stage a) gives rise to a crude compact which does not retain the shape imposed by the axial or isostatic pressing during the initial stage of the heating and can therefore not be fired. In the preferred embodiment the grinding in stage a) is continued until the carbon material and silicon have a particle size equal to or less than 5 μm. In addition, in the mixing process of stage a), from 5 to 100 parts by weight of powdered silicon are preferably used per 100 parts by weight of carbon material. In all cases the quantity of powdered silicon used in stage c) is such as not only to ensure stoichiometric conversion of all the carbon to silicon carbide but also to fill the residual pores. Stage d) is effected by placing the crude compacts on substrates comprising conventional separating agents such as boron nitride to prevent the components bonding to the substrate. The temperature is preferably of the order of 1500°C and the pressure between $10^{-3}$ and 100 Pa. These pressures can be easily obtained using diffusion and rotary pumps respectively. At the end of the process any excess silicon can be removed by simple sandblasting or be ground off with diamond-clad tools, to obtain a ceramic component having a silicon carbide/silicon ratio of between about 9:1 and 7:3.

EXAMPLE 1

Scrap silicon from the electronics industry is crushed and ground in an agate jar mill to an average particle size of 5 μm. High-porosity graphitized RVG 4000 "Carbone Lorraine" rayon fibres with a diameter of 10-12 μm and a BET surface area of about 100 m²/g are used as the carbon material. These fibres are ground in an agate jar mill to an average particle size of 5 μm, ie less than the fibre diameter. The surface area measured by the BET method showed values of about 1 m²/g for the silicon and about 250 m²/g for the carbon.

2 grams of the described carbon material, 0.1 grams of the powder silicon and 0.2 grams of water are mixed together. The mixture prepared in this manner is placed in a parallelepiped cobalt steel mould and compressed to a pressure of 200 MPa. The resultant density is about 0.95 g/cm³. On top of this component there is then placed a crude compact formed only from silicon with a particle size of less than 300 μm, it having the same area and a mass of 6.3 grams.

The two plates are placed in their superposed state on a substrate of quartz coated with the powdered silicon nitride paint to prevent adhesion between the silicon and quartz. The assembly is then heated in a furnace to 1500°C at a heating rate of 600°C/hour under a pressure of 0.1 Pa. The component is left for 15 minutes at this temperature and is then cooled to ambient temperature. The density of the obtained component is 3.12 g/cm³, equal to about 99.5% of the theoretical density and with a silicon carbide content close to 90% by volume. Thus the quantity of unreacted carbon and the residual porosity together account for less than 0.5% by volume.

Examinations carried out on sections of these samples by electronic scanning microscope show a distributed porosity of average size less than 2 μm and traces of uniformly distributed residual carbon.

EXAMPLE 2

Silicon and carbon powders prepared as in Example 1 are mixed together in the following proportions: 2 parts of carbon, 1 part of silicon and 0.3 parts of water, the parts being by weight. Plates are then prepared under the same pressing conditions, the crude compacts having a density of 1.11 g/cm³. 3.6 parts of silicon are added to these objects, which are then consolidated under the conditions described in Example 1. When extracted from the furnace and ground with diamond-clad grinding wheels, the samples showed a density of 2.94 g/cm³, equal to about 99.5% of the theoretical for a silicon carbide content of about 70% by volume.

## Claims

1. A method for producing ceramic components formed from silicon carbide and elemental silicon, comprising the following stages in succession:

a) mixing together
- 100 parts by weight of carbon material chosen from graphitized or carbonized rayon fibres or phenolic substances ground to an average particle size or less than 10 $\mu$m and a geometrical density of less than 1.6 g/cm$^3$;
- from 0 to 250 parts by weight of powdered silicon with an average particle size of less than 25 $\mu$m; and
- from 1 to 10% by weight (of the total powder mixture) of water;

b) cold-forming the mixture obtained in stage a) by pressing until a density of between 0.9 and 1.9 g/cm$^3$ is obtained for the resultant crude compact;

c) cold-forming a crude compact from powdered silicon having an average particle size of less than 300 $\mu$m, using a silicon quantity which when added to the quantity used in stage a) gives a total varying from 270 to 400 parts by weight per 100 parts by weight of the carbon material present in the crude compact of stage b);

d) heating the crude compacts obtained in stages b) and c), placed in contact with each other, to a temperature of between 1410 and 1800° C at a pressure of between 10$^{-3}$ and 100 Pa, until the carbon material has been converted completely or substantially completely into silicon carbide.

2. A method as claimed in claim 1, characterised in that in the mixing process of stage a), a carbon material ground to a particle size equal to or less than 5 $\mu$m is used.

3. A method as claimed in claim 1, characterised in that in stage a) powdered silicon is used having an average particle size equal to or less than 5$\mu$m.

4. A method as claimed in claim 1, characterised in that in stage a) from 5 to 100 parts by weight of powdered silicon are mixed with 100 parts by weight of carbon material.

5. A method as claimed in claim 1, characterised in that in stage d) heating is carried out to a temperature of the order of 1500° C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-1 671 092 (SCHNEIDER & CO.) * Claims 1,3; page 8, at the bottom; page 9 * | 1-5 | C 04 B 35/65 C 04 B 35/56 |
| Y,D | US-A-4 385 020 (C.R. MORELOCK) * Claims 1-3; column 2, lines 53-59 * | 1-5 | |

TECHNICAL FIELDS SEARCHED (Int. Cl.4)

C 04 B

The present search report has been drawn up for all claims

| Place of search | Date of completion of the search | Examiner |
|---|---|---|
| THE HAGUE | 22-03-1989 | LUETHE H. |

EPO FORM 1503 03.82 (P0401)